(19) Europäisches Patentamt
European Patent Office
Office européen des brevets

(11) **EP 3 646 122 B1**

(12) **EUROPÄISCHE PATENTSCHRIFT**

(45) Veröffentlichungstag und Bekanntmachung des Hinweises auf die Patenterteilung:
**13.09.2023 Patentblatt 2023/37**

(21) Anmeldenummer: **18736844.4**

(22) Anmeldetag: **27.06.2018**

(51) Internationale Patentklassifikation (IPC):
**G05B 13/04** (2006.01)

(52) Gemeinsame Patentklassifikation (CPC):
**G05B 13/04**

(86) Internationale Anmeldenummer:
**PCT/EP2018/067213**

(87) Internationale Veröffentlichungsnummer:
**WO 2019/002349 (03.01.2019 Gazette 2019/01)**

(54) **VERFAHREN UND VORRICHTUNG ZUM EINSTELLEN MINDESTENS EINES PARAMETERS EINES AKTORREGELUNGSSYSTEMS UND AKTORREGELUNGSSYSTEM**

METHOD AND DEVICE FOR SETTING AT LEAST ONE PARAMETER OF AN ACTUATOR CONTROL SYSTEM AND ACTUATOR CONTROL SYSTEM

PROCÉDÉ ET DISPOSITIF SERVANT À RÉGLER AU MOINS UN PARAMÈTRE D'UN SYSTÈME DE RÉGULATION D'ACTIONNEUR ET SYSTÈME DE RÉGULATION D'ACTIONNEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2017 DE 102017211209**

(43) Veröffentlichungstag der Anmeldung:
**06.05.2020 Patentblatt 2020/19**

(73) Patentinhaber:
• **Robert Bosch GmbH**
  **70442 Stuttgart (DE)**
• **Technische Universität Darmstadt**
  **64289 Darmstadt (DE)**

(72) Erfinder:
• **BISCHOFF, Bastian**
  **73734 Esslingen (DE)**
• **VINOGRADSKA, Julia**
  **70469 Stuttgart (DE)**
• **PETERS, Jan**
  **64342 Seeheim-Jugenheim (DE)**

(74) Vertreter: **Banse & Steglich Patentanwälte PartmbB Patentanwaltskanzlei Herzog-Heinrich-Straße 23 80336 München (DE)**

(56) Entgegenhaltungen:
DE-U1-202017 102 235

• BISCHOFF B ET AL: "Policy search for learning robot control using sparse data", 2014 IEEE INTERNATIONAL CONFERENCE ON ROBOTICS AND AUTOMATION (ICRA), IEEE, 31. Mai 2014 (2014-05-31), Seiten 3882-3887, XP032650510, DOI: 10.1109/ICRA.2014.6907422 [gefunden am 2014-09-22]
• Ankit Goyal: "Online Learning and Planning of Dynamical Systems Using Gaussian Processes", , 13. Januar 2015 (2015-01-13), XP055508571, Gefunden im Internet: URL:http://scholarbank.nus.sg/bitstream/10 635/119798/1/AnkitGoyal.pdf [gefunden am 2018-09-20]
• Julia Vinogradska ET AL: "Stability of Controllers for Gaussian Process Forward Models", , 19. Juni 2016 (2016-06-19), XP055508111, Gefunden im Internet: URL:http://www.jmlr.org/proceedings/papers /v48/vinogradska16.pdf [gefunden am 2018-09-19]

**Beschreibung**

Die Erfindung betrifft ein Verfahren zum automatischen Einstellen mindestens eines Parameters eines Aktorregelungssystems, ein Computerprogramm, ein maschinenlesbares Speichermedium auf dem das Computerprogramm gespeichert ist und ein Aktorregelungssystem, dessen Parameter mit diesem Verfahren eingestellt wurde.

Stand der Technik

Aus der DE 10 2013 212 889 A1 ist ein Verfahren zum Erstellen einer Regelungsfunktion bekannt, um mindestens eine physikalische Zustandsgröße einer physikalischen Einheit mithilfe mindestens einer Stellgröße auf mindestens eine vorgegebene Sollgröße zu regeln, umfassend die folgenden Schritte:

- Bereitstellen eines Funktionsmodells zum Abbilden einer physikalischen Einheit;
- Bereitstellen einer Regelungsfunktion mit Regelungsparametern, wobei die Regelungsfunktion die Stellgröße abhängig von der physikalischen Zustandsgrö-ße generiert; und
- Anpassen der Regelungsparameter basierend auf ermittelten Gesamtkosten, wobei die Gesamtkosten aus einer Kombination von Funktionswerten einer Kostenfunktion gebildet werden

Die Druckschrift "Policy search for learning robot control using sparse data", B. Bischoff et al., IEEE 2014, Seite 3882 bis 3887 offenbart ein Regelstrategie-Suchverfahren bekannt, das mithilfe einer Langzeitkostenfunktion Regelungsparameter ermittelt. Dabei werden Vorwärtsdynamiken, die als ein Gauß-Prozess implementiert sind, verwendet. Das Gauß-Prozess-Modell kann zur iterativen Berechnung der Gauß-Approximationen verwendet werden, um Langzeitprädiktionen bei gegebenen Parametern zu ermitteln. Mit den so prädizierten Zustandsverteilungen kann eine Approximation der erwarteten Langzeitkosten und deren Gradienten analytisch berechnet werden.

Die Druckschrift "Online learning and planning of dynamical systems using Gaussian processes", Ankit Goyal, Thesis, 2015, Indian Institute of Technology, India offenbart einen generellen Überblick über Lernverfahren basierend auf Gaußprozessen.

Die Druckschrift J. Vinogradska et al., "Stability of controllers for Gaussian process forward models", Januar 2016 betrifft Regelstrategie-Suchverfahren für Regler, die mit Gaußprozess-Vorwärtsmodellen arbeiten.

Vorteil der Erfindung

Das Verfahren mit den Merkmalen des unabhängigen Anspruchs 1 hat demgegenüber den Vorteil, dass eine optimale Einstellung des Aktorregelungssystems auf unterschiedliche Aktoren möglich ist. Vorteilhafte Weiterbildungen sind Gegenstand der unabhängigen Ansprüche.

Offenbarung der Erfindung

In einem ersten Aspekt betrifft die Erfindung ein Verfahren zum automatischen Einstellen mindestens eines Parameters eines Aktorregelungssystem zum Regeln einer Regelungsgröße eines Aktors auf eine vorgebbare Sollgröße, wobei das Aktorregelungssystem eingerichtet ist, abhängig von dem mindestens einen Parameter, der Sollgröße und der Regelungsgröße eine Stellgröße zu generieren und abhängig von dieser Stellgröße den Aktor anzusteuern, wobei ein neuer Wert des mindestens einen Parameters abhängig von einer Langzeit-Kostenfunktion gewählt wird, wobei diese Langzeit-Kostenfunktion abhängig von einer prädizierten zeitlichen Evolution einer Wahrscheinlichkeitsverteilung der Regelungsgröße des Aktors ermittelt wird, damit der Parameter dann auf diesen neuen Wert gesetzt werden kann, wobei die erwartete zeitliche Evolution der Wahrscheinlichkeitsverteilung der Regelungsgröße durch eine Approximation einer Integration über mögliche Werte der Regelungsgröße ermittelt wird, wobei diese Approximation durch numerische Quadratur geschieht.

Die Langzeit-Kostenfunktion ist hierbei eine Kostenfunktion, die über einem Vorausschauintervall ermittelt wird, d.h. die prädizierte zeitliche Evolution der Wahrscheinlichkeitsverteilung wird über diesem Vorausschauintervall ermittelt und die Langzeit-Kostenfunktion wird wiederum abhängig hiervon ermittelt.

In einer vorteilhaften Weiterbildung ist ein Modell vorgesehen. Bei diesem Modell kann es sich insbesondere um einen Gauß-Prozess, vorteilhafterweise einen dünnbesetzten (engl. *Sparse*) Gauß-Prozess handeln. Die prädizierte zeitliche Evolution wird dann mittels dieses Modells ermittelt. Dies macht das Verfahren besonders leistungsstark.

In einer Weiterbildung dieses Aspekts kann vorgesehen sein, dass das Modell abhängig von der Stellgröße die dem Aktor zugeführt wird, wenn das Aktorregelungssystem den Aktor regelt, angepasst wird. Das Modell wird auch abhängig von der hierbei resultierenden Regelungsgröße angepasst. Unter "Anpassung des Modells" kann hierbei verstanden werden, dass Modellparameter, die das Verhalten des Modells charakterisieren, angepasst werden.

Nach erfolgter Anpassung des Modells wird dann erneut ein (optimaler) neuer Wert des mindestens einen Parameters abhängig von der prädizierten Evolution der Wahrscheinlichkeitsverteilung der Regelungsgröße des Aktors ermittelt (und der Parameter dann erneut auf diesen neuen Wert gesetzt). Die erneute Ermittlung des neuen Werts des mindestens einen Parameters wird dabei abhängig von dem nun angepassten Modell ermittelt.

D.h. in dieser Weiterbildung ist ein episodenhafter Ansatz vorgesehen, in dem zunächst das Modell verbessert wird (indem bei Regelung des realen Aktors mit dem Aktorregelungssystem das Verhalten des realen Aktors beobachtet wird). Anschließend wird das Aktorregelungssystem verbessert, indem die Parameter, die eine Regelstrategie des Aktorregelungssystem unter Simulation der Reaktion Aktors durch das Modell optimiert werden. Diese Abfolge von Verbesserung des Modells und Anpassung der Parameter kann mehrfach wiederholt ausgeführt werden.

Dieses Vorgehen hat den Vorteil, dass Modell und Aktorregelungssystem sukzessive verbessert werden und somit eine besonders gute Anpassung des Aktorregelungssystems resultiert.

Mit "numerischer Quadratur" ist hierbei eine Approximationsmethode gemeint, die das Integral durch Auswertung des Integranden an Stützstellen und zu den Stützstellen zugehörigen Stützgewichten annähert.

Die erwartete zeitliche Evolution kann hierbei mittels eines (Gauß-)Prozess mit einer Ein- oder Mehrzahl von Zeitschritten ermittelt werden. Der Gauß-Prozess modelliert hierbei zu jedem festen Zustand eines Zeitschritts eine Wahrscheinlichkeitsverteilung mit zugeordnetem Mittelwert und zugeordneter Varianz des Folgezustands (also des Zustands zu einem nächsten Zeitschritt).

Die Verwendung der numerischen Quadratur hat insbesondere in Verbindung mit der Verwendung von Gauß-Prozessen den Vorteil, dass die Lösung numerisch besonders einfach ist, wobei gleichzeitig die Genauigkeit der Näherung sehr gut ist, sodass das so erzeugte Aktorregelungssystem besonders leistungsfähig wird.

Es wird eine Dichte der Stützstellen abhängig von einer ermittelten, insbesondere mittels des Modells und/oder des Aktorregelungssystems ermittelten, zeitlichen Evolution der Regelungsgröße ausgehend von einem aus einer initialen Wahrscheinlichkeitsverteilung (pseudo-)zufällig ermittelten initialen Wert der Regelungsgröße ermittelt. D.h. der initiale Wert wird hierbei insbesondere aus der initialen Wahrscheinlichkeitsverteilung "gesampelt". Es wird also eine zeitliche Evolution (also eine Trajektorie im Zustandsraum) der Regelungsgröße ermittelt, an deren Anfangspunkt die Regelungsgröße den zufällig ermittelten initialen Wert annimmt. Die Dichte der Stützstellen wird dann abhängig von dieser zeitlichen Evolution gewählt. Dies führt zu einer effizienten Wahl der Stützstellen, da tatsächliche Trajektorien der Regelungsgröße mit adäquater Wahrscheinlichkeit in die Wahl der Stützstellen einfließen. Damit kann insbesondere sichergestellt werden, dass das Verfahren auch dann zuverlässig funktioniert, wenn der Parameter des Aktorregelungssystems noch nicht gut angepasst ist.

Es wird die Dichte von Stützstellen auch abhängig von einer ermittelten, insbesondere mittels des Modells und/oder des Aktorregelungssystems ermittelten, zeitlichen Evolution der Regelungsgröße) ausgehend vom Sollwert) als initialem Wert der Regelungsgröße ermittelt. Dies hat den Vorteil, dass die Stützstellen besonders effizient gewählt werden, da bei einer Konvergenz des Verfahrens davon auszugehen ist, dass eine tatsächliche Trajektorie der Regelungsgröße in der Nähe einer Trajektorie liegen, auf der die Regelungsgröße den Sollwert annimmt.

Die Dichte von Stützstellen wird abhängig von einer Größe gewählt, die eine Glattheit des Modells an wenigstens einem Wert der Regelungsgröße in der oder den ermittelten zeitlichen Evolutionen der Regelungsgröße charakterisiert. Unter dem Ausdruck "Glattheit des Modells" kann präziser formuliert die Glattheit der Modellvorhersage, d.h. die Glattheit einer für den nachfolgend nächsten Zeitschritt prädizierten Wahrscheinlichkeitsverteilung, verstanden werden. Eine geringe Glattheit des Modells bedeutet hierbei, dass bei den zeitlichen Evolutionen zwischen aufeinanderfolgenden Zeitschritten größere Differenzen zu erwarten sind als in Fällen, in denen die Glattheit des Modells einen höheren Wert aufweist.

Diese die Glattheit Modells charakterisierende Größe kann insbesondere eine Varianz des Gauß-Prozesses sein, die wenigstens einem der Werte zugeordnet ist, den die Regelungsgröße in der oder den ermittelten zeitlichen Evolutionen annimmt. Je größer diese Varianz ist, desto geringer ist die Glattheit des Modells.

Auf diese Weise kann sichergestellt werden, dass die Wahl der Stützstellen so gewählt ist, dass ein Fehler der Approximation, insbesondere der numerischen Quadratur, besonders gering wird.

Um dies optimal durchzuführen, kann die Dichte von Stützstellen in einem Bereich abhängig von einem kleinsten Wert gewählt werden, wobei dieser kleinste Wert ein Minimalwert aus den eine Glattheit des Modells charakterisierenden Größen denjenigen Werten der Regelungsgröße ist, die in diesem Bereich liegen. D.h. es werden eine oder mehrere zeitliche Evolutionen der Regelungsgrö-ße als diskrete Folge von Werten ermittelt, die die Regelungsgröße annimmt. Es werden dann nur diejenigen Werte der diskreten Folge von Werten betrachtet, die in dem vorgenannten Bereich liegen. Jedem dieser Werte ist eine Größe zugeordnet, die die Glattheit des Modells an dieser Stelle charakterisiert. Aus diesen zugeordneten Werten wird der kleinste Wert ausgewählt.

Alternativ oder zusätzlich kann die Dichte von Stützstellen in einem Bereich auch abhängig von einer mittleren Dichte von Stützstellen in diesem Bereich gewählt wird. Insbesondere kann vorgesehen sein, dass die Dichte von Stützstellen erhöht wird, wenn ein Quotient aus mittlerer Dichte von Stützstellen und dem kleinsten Wert einen vorgebbaren Schwellwert, insbesondere den Wert 1, unterschreitet. Ein solches Verfahren ist besonders einfach zu implementieren.

Eine Erhöhung der mittleren Dichte von Stützstellen kann dadurch geschehen, dass ein Volumenelement, auf das eine Regel zur Generierung von Stützstellen angewendet wird, verkleinert wird, beispielsweise indem ein vorhandenes Volumenelement in eine Mehrzahl kleinerer Volumenelemente aufgeteilt wird und dann für jedes dieser kleineren Volumenelement mittels der Regel zur Generierung von Stützstellen generiert werden.

In einem weiteren Aspekt kann vorgesehen sein, dass die Ermittlung eines Ergebnisses der numerischen Quadratur abhängig von einer Ermittlung einer zeitlichen Evolution von Gewichten erfolgt, wobei die Gewichte jeweils durch das Produkt aus Stützgewichten und den jeweiligen Werten der Wahrscheinlichkeitsdichte an der zugehörigen Stützstelle gegeben ist.

Dies hat den Vorteil, dass sich die zeitliche Evolution dieser Produkte von Zeitschritt zu Zeitschritt als Matrixmultiplikation besonders effizient durchführen lässt. Die Auswertung der Funktion, die die Wahrscheinlichkeitsdichte beschreibt, muss hierbei an jeder Stützstelle nur einmal erfolgen. Dieses Verfahren lässt sich besonders gut parallelisieren und damit besonders effizient auf einer oder mehreren GPU ausführen.

In einem weiteren Aspekt der Erfindung kann vorgesehen sein, dass die Langzeit-Kostenfunktion abhängig von einer lokalen Kostenfunktion gewählt wird, wobei die lokale Kostenfunktion abhängig von einer Gaußfunktion und/oder einer Polynomfunktion gewählt wird, welche abhängig von einer Differenz zwischen Stellgröße und vorgebbarem Sollwert ist. Die Kostenfunktion kann beispielsweise als eine Linearkombination aus Gaußfunktion und Polynomfunktion gewählt werden. Eine solche Wahl der Kostenfunktion ist besonders einfach.

Vorteilhafterweise kann in einem noch weiteren Aspekt vorgesehen sein, dass die Stellgröße mittels einer Beschränkungsfunktion auf Werte innerhalb eines vorgebbaren Stellgrößenbereichs beschränkt wird. Dies ermöglicht eine besonders einfache Limitierung der Stellgröße.

Nachfolgend werden Ausführungsformen der Erfindung unter Bezugnahme auf die beiliegenden Zeichnungen näher erläutert. In den Zeichnungen zeigen:

Figur 1    schematisch eine Interaktion zwischen Lernsystem und Aktor;
Figur 2    schematisch einen Aufbau von Teilen des Lernsystems;
Figur 3    schematisch eine Interaktion zwischen Aktorregelungssystem und Aktor;
Figur 4    in einem Flussdiagramm eine Ausführungsform des Verfahrens zum Trainieren des Aktorregelungssystems;
Figur 5    in einem Flussdiagramm eine Ausführungsform des Verfahrens zum Ermitteln der zeitlichen Evolution der Wahrscheinlichkeitsdichte;
Figur 6    in einem Flussdiagramm eine Ausführungsform des Verfahrens zum Ermitteln der Stützstellen.

Beschreibung der Ausführungsbeispiele

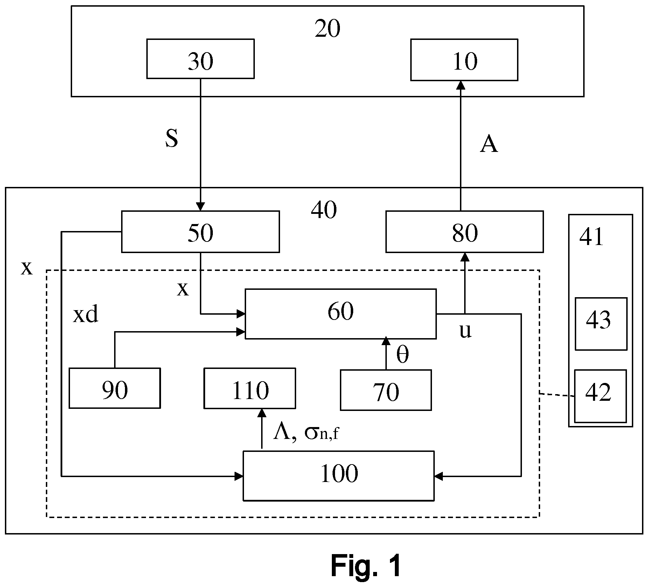

Figur 1 zeigt den Aktor 10 in seiner Umgebung 20 in Interaktion mit dem Lernsystem 40. Aktor 10 und Umgebung 20 werden gemeinschaftlich nachfolgend auch als Aktorsystem bezeichnet. Ein Zustand des Aktorsystems wird mit einem Sensor 30 erfasst, der auch durch eine Mehrzahl von Sensoren gegeben sein kann. Ein Ausgangssignal S des Sensors 30 wird an das Lernsystem 40 übermittelt. Das Lernsystem 40 ermittelt hieraus ein Ansteuersignal A, welches der Aktor 10 empfängt.

Bei dem Aktor 10 kann es sich beispielsweise um einen (teil-)autonomen Roboter, beispielsweise ein (teil-)autonomes Kraftfahrzeug einen (teil-) autonomen Rasenmäher handeln. Es kann sich auch um eine Aktuierung eines Stellglieds eines Kraftfahrzeugs handeln, beispielsweise um eine Drosselklappe oder um einen Bypass-Steller für eine Leerlaufregelung. Es kann sich auch um eine Heizungsanlage oder einen Teil der Heizungsanlage handeln, wie etwa einen Ventilsteller. Bei dem Aktor 10 kann es sich insbesondere auch um größere Systeme handeln, wie beispielsweise einen Verbrennungsmotor oder einen (ggf. hybridisierten) Antriebsstrang eines Kraftfahrzeugs oder auch um ein Bremssystem.

Bei dem Sensor 30 kann es sich beispielsweise um einen oder mehrere Videosensoren und/oder einen oder mehrere Radarsensoren und/oder einen oder mehrere Ultraschallsensoren und/oder einen oder mehrere Positionssensoren (beispielsweise GPS) handeln. Auch andere Sensoren sind denkbar, beispielsweise ein Temperatursensor.

In einem anderen Ausführungsbeispiel kann es sich bei dem Aktor 10 um einen Fertigungsroboter handeln, und bei dem Sensor 30 dann beispielsweise um einen optischen Sensor handeln, der Eigenschaften von Fertigungserzeugnissen des Fertigungsroboters erfasst.

Das Lernsystem 40 empfängt das Ausgangssignal S des Sensors in einer optionalen Empfangseinheit 50, die das Ausgangssignal S in eine Regelungsgröße x umwandelt (alternativ kann auch unmittelbar das Ausgangssignal S als Regelungsgröße x übernommen werden). Die Regelungsgröße x kann beispielsweise ein Ausschnitt oder eine Weiterverarbeitung des Ausgangssignals S sein. Die Regelungsgröße x wird einem Regler 60 zugeführt, in dem eine Regelungsstrategie π implementiert ist.

In einem Parameterspeicher 70 sind Parameter θ hinterlegt, die dem Regler 60 zugeführt werden. Die Parameter θ parametrieren die Regelungsstrategie π. Bei den Parametern θ kann es sich um eine Einzahl oder Mehrzahl von Parametern handeln.

Ein Block 90 führt dem Regler 60 die vorgebbare Sollgröße xd zu. Es kann vorgesehen sein, dass der Block 90 die vorgebbare Sollgröße xd generiert, beispielsweise abhängig von einem Sensorsignal, dass dem Block 90 vorgegeben wird. Es ist auch möglich, dass Block 90 die Sollgröße xd aus einem dedizierten Speicherbereich ausliest, in dem sie abgelegt ist.

Abhängig von der Regelungsstrategie π(θ) (und damit abhängig von den Parametern θ), von der Sollgröße xd und der Regelungsgröße x generiert der Regler 60 eine Stellgröße u. Diese kann beispielsweise abhängig von einer Differenz x-xd zwischen Regelungsgröße x und Sollgröße xd ermittelt werden.

Der Regler 60 übermittelt die Stellgröße u an eine Ausgabeeinheit 80, die hieraus das Ansteuersignal A ermittelt. Beispielsweise ist es möglich, dass die Ausgabeeinheit zunächst überprüft, ob die Stellgröße u in einem vorgebbaren Wertebereich liegt. Ist dies der Fall, wird abhängig von der Stellgröße u das Ansteuersignal A ermittelt, beispielsweise, indem abhängig von der Stellgröße u ein zugeordnetes Ansteuersignal A aus einem Kennfeld ausgelesen wird. Dies ist der Normalfall. Wird hingegen ermittelt, dass die Stellgröße u nicht in dem vorgebbaren Wertebereich liegt, so kann vorgesehen sein, dass das Ansteuersignal A derart ausgebildet ist, dass es den Aktor A in einen abgesicherten Modus überführt.

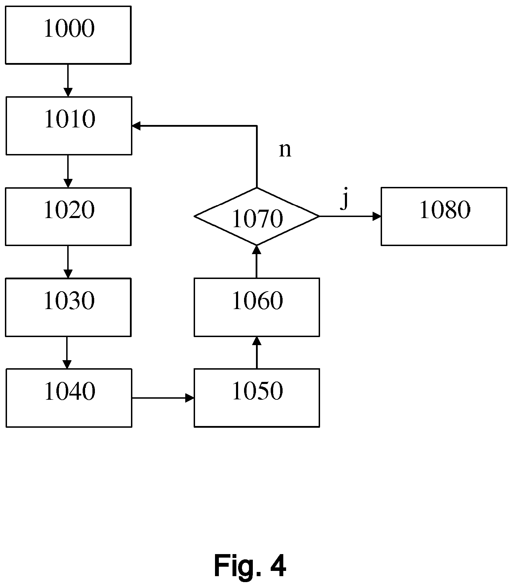

Empfangseinheit 50 übermittelt die Regelungsgröße x an einen Block 100. Ebenso übermittelt Regler 60 die korrespondierende Stellgröße u an den Block 100. Block 100 speichert die Zeitreihen der an einer Folge von Zeitpunkten empfangenen Regelungsgröße x und der jeweils korrespondierenden Stellgröße u. Block 100 kann dann abhängig von diesen Zeitreihen Modellparameter $A$, $\sigma_n$, $\sigma_f$ des Modells g anpassen. Die Modellparameter $A$, $\sigma_n$, $\sigma_f$ werden einem Block 110 zugeführt, der sie beispielsweise an einer dedizierten Speicherstelle speichert. Dies wird weiter unten in Figur 4, Schritt 1030 näher beschrieben.

Das Lernsystem 40 umfasst in einer Ausführungsform einen Computer 41 mit einem maschinenlesbare Speichermedium 42, auf dem ein Computerprogramm gespeichert ist, dass, wenn es vom Computer 41 ausgeführt wird, diesen veranlasst, die beschriebenen Funktionalitäten des Lernsystems 40 auszuführen. Der Computer 41 umfasst im Ausführungsbeispiel eine GPU 43.

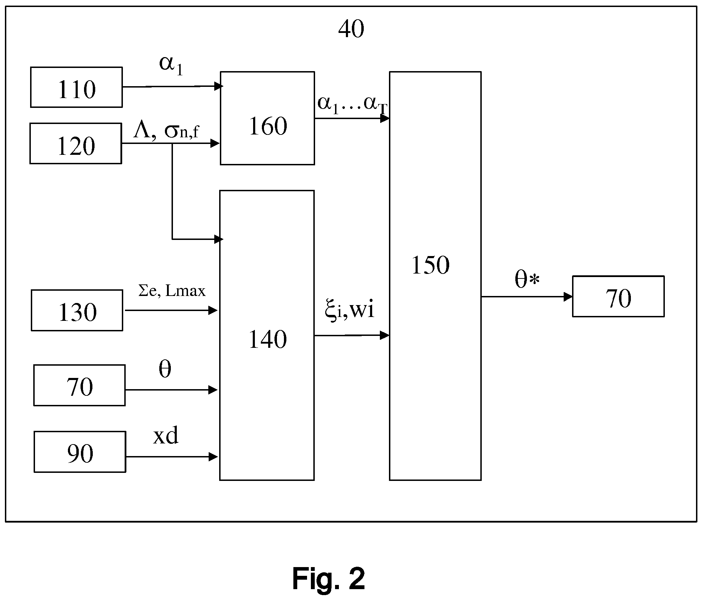

Das Modell g kann zum Optimieren der Parameter θ der Regelungsstrategie π verwendet werden. Dies ist schematisch in Figur 2 illustriert.

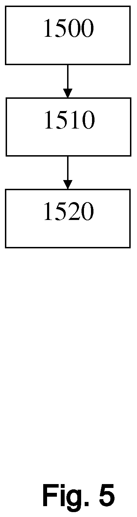

In einem Block ist eine initiale Wahrscheinlichkeitsverteilung $p(x_0)$ des Regelungsparameters x gespeichert. Der Block 110 ermittelt hieraus einen ersten Gewichtsvektor $\alpha_1$ und übermittelt diesen ersten Gewichtsvektor $\alpha_1$ an einen Block 160. Funktion und eine Ausführungsform der Ermittlung des ersten Gewichtsvektors $\alpha_1$ sind unten in Figur 5, Schritt 1500 beschrieben.

Block 120 übermittelt die Modellparameter $A$, $\sigma_n$, $\sigma_f$ ebenfalls an den Block 160. Block 160 ermittelt aus dem ersten Gewichtsvektor $\alpha_1$ und den Modellparametern $A$, $\sigma_n$, $\sigma_f$ eine Folge von Gewichtsvektoren $\alpha_1$, $\alpha_2$,... $\alpha_T$ einem Block 150 übergeben werden.

Block 120 übermittelt die Modellparameter $A$, $\sigma_n$, $\sigma_f$ auch an einen Block 140. Ein Block 130 ermittelt eine Rauschvarianz $\Sigma_\varepsilon$ und eine maximale Partitionierungstiefe Lmax (beispielsweise indem diese Werte vorgegeben sind und aus dedizierten Speicherstellen im Speicher ausgelesen werden) und übermittelt sie dem Block 140. Parameterspeicher 70 übermittelt Parameter θ an den Block 140, Block 90 übermittelt den Sollwert xd an den Block 140.

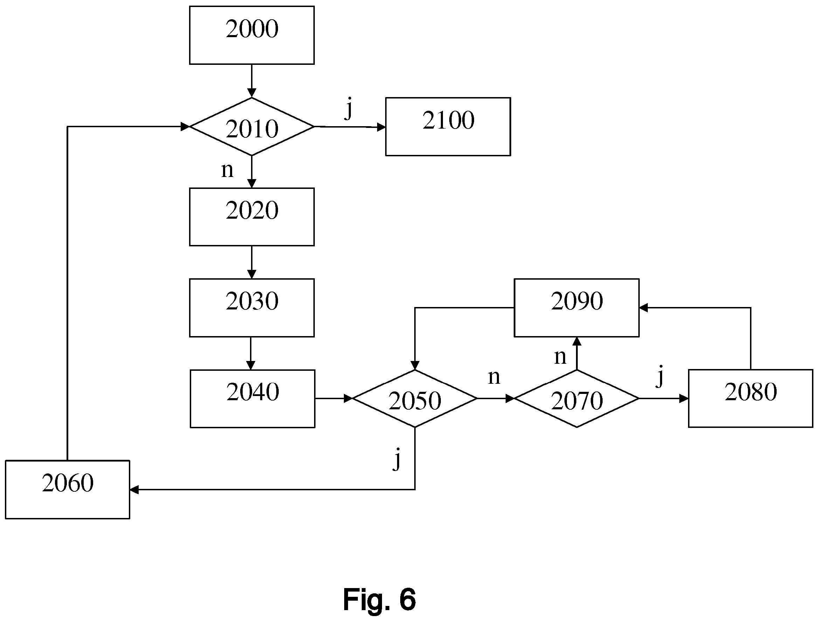

Block 140 ermittelt aus diesen Werten Stützstellen $\xi_i$ und zugehörige Stützgewichte $w_i$. Eine Ausführungsform des Algorithmus dieser Ermittlung ist in Figur 6 illustriert. Die ermittelten Stützstellen $\xi_i$ und zugehörigen Stützgewichte $w_i$ werden dem Block 150 übergeben.

Block 150 ermittelt hieraus neue Parameter θ*. Dies ist in Figur 4, Schritt 1050 beschrieben. Die neuen Parameter θ* werden dem Parameterspeicher 70 übergeben, wo die Werte der Parameter θ durch die jeweils entsprechenden Werte der neuen Parameter θ* ersetzt werden.

Die in Figur 2 dargestellten Blöcke können Teil des Lernsystems 40 sein, und dort wie in Zusammenhang mit Figur 1 beschrieben als Teil eines Computerprogramms implementiert und auf dem maschinenlesbaren Speichermedium 42 gespeichert sein.

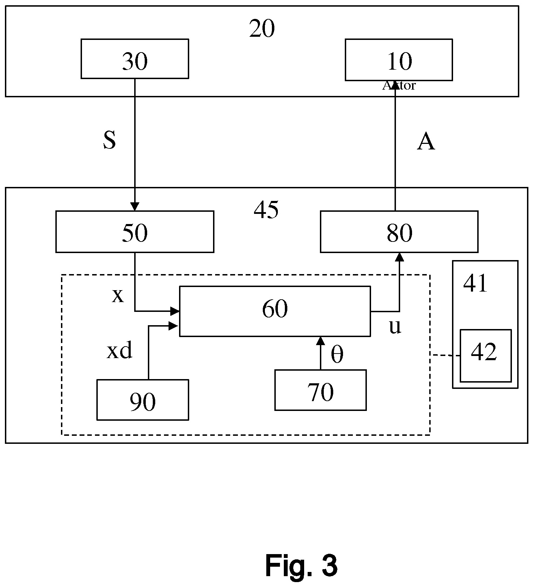

Figur 3 illustriert das Zusammenspiel des Aktorregelungssystems 45 mit dem Aktor 10. Der Aufbau des Aktorregelungssystems 45 und seine Interaktion mit Aktor 10 und Sensor 30 gleicht in weiten Teilen dem Aufbau des Lernsystems 40, weshalb hier nur die Unterschiede beschrieben werden. Im Gegensatz zum Lernsystem 40 weist das Aktorregelungssystem 45 keinen Block 100 und auch keinen Block 110 auf. Die Übermittelung von Größen an den Block 100 entfällt daher. Im Parameterspeicher 70 des Aktorregelungssystems 45 sind Parameter θ hinterlegt, die mit dem erfindungsgemäßen Verfahren, beispielsweise wie in Figur 4 illustriert, ermittelt wurden.

Figur 4 illustriert eine Ausführungsform des erfindungsgemäßen Verfahrens. Zunächst (1000) werden die Parameter θ auf initiale Werte gesetzt. Die Parameter θ können hierbei zufällig initialisiert werden, sie können aber auch fest vorgegeben werden.

Dann (1010) generiert der Regler 60 wie in Figur 1 beschrieben abhängig von der Regelungsstrategie π(θ) Stellgrößen u, mit denen wie in Figur 1 beschrieben der Aktor 10 angesteuert wird. Der Aktor 10 interagiert über die Umwelt 20 mit dem Sensor 30, dessen Sensorsignal S als Regelungsgröße x mittelbar oder unmittelbar vom Regler 60 empfangen wird.

Block 100 empfängt und aggregiert (1020) die Zeitreihen von Stellgröße u und Regelungsgröße x die gemeinsam jeweils ein Paar z aus Regelungsgröße x und Stellgröße x ergeben, $z = (x^1, \dots, x^D, u^1 \dots u^F)^T$.

D ist hierbei die Dimensionalität der Regelungsgröße x und F die Dimensionalität der Stellgröße u, d.h. $x \in \mathbb{R}^D, u \in \mathbb{R}^F$.

Abhängig von dieser Zustandstrajektorie wird dann (1030) ein Gauß-Prozess g derart angepasst, dass zwischen aufeinanderfolgenden Zeitpunkten t, t+1 gilt

$$x_{t+1} = x_t + g(x_t, u_t). \tag{1}$$

Hierbei ist

$$u_t = \pi_\theta(x_t). \tag{1'}$$

Eine Kovarianzfunktion k des Gauß-Prozesses g ist beispielsweise gegeben durch

$$k(z,w) = \sigma_f^2 \exp\left(-\frac{1}{2}(z-w)^T \Lambda^{-1} (z-w)\right). \tag{2}$$

Parameter $\sigma_f^2$ ist hierbei eine Signalvarianz, $\Lambda = diag(l_1^2 \dots l_{D+F}^2)$ ist eine Sammlung quadrierter Längenskalen $l_1^2 \dots l_{D+F}^2$ für jede der D+F Eingangsdimensionen.

Eine Kovarianzmatrix K ist definiert durch

$$K(Z,Z)_{i,j} = k(z^i, z^j). \tag{3}$$

Der Gauß-Prozess g ist dann charakterisiert durch zwei Funktionen: Durch einen Mittelwert μ und eine Varianz Var, die gegeben sind durch

$$\mu(z_*) = k(z_*, Z)(K(Z,Z) + \sigma_n^2 I)^{-1} y, \tag{4}$$

$$Var(z_*) = k(z_*, z_*) - k(z_*, Z)(K(Z,Z) + \sigma_n^2 I)^{-1} k(Z, z_*). \tag{5}$$

y ist hierbei in üblicher Weise gegeben durch $y^i = f(z^i) + \varepsilon^i$, mit weißem Rauschen $\varepsilon^i$.

Die Parameter $\Lambda$, $\sigma_n$, $\sigma_f$ werden dann an die Paare $(z^i, y^i)$ in bekannter Weise angepasst, indem eine logarithmierte *marginal* likelihood-Funktion maximiert wird.

Dann (1040) werden (wie in Figur 6 beschrieben) Stützstellen $\xi_i$ und zugehörige Stützgewichte $w_i$ ermittelt. Ferner wird ein Vorausschauweite T aus einem Speicherbereich ausgelesen und es werden (wie in Figur 5 beschrieben) Gewichtsvektoren $\alpha_i$ ermittelt.

Anschließend (1050) werden neue, optimale Parameter θ* ermittelt. Hierzu wird eine vordefinierte, lokale Kostenfunktion r(x) herangezogen, die beispielsweise durch ein Kennfeld oder eine mathematische Funktion definiert sein kann.

Für jeden Wert einer Variable *n* = 1 ... *N* wird nun ein geschätzter Erwartungswert E der lokalen Kostenfunktion r ermittelt:

$$E_{x \sim \phi_n}[r(x)] = \int r(x) \phi_n(x) dx \tag{6}$$

Die Basisfunktionen $\phi_n(x)$ sind hierbei gegeben durch

$$\phi_n(x) = p(x_{t+1} = x | x_t = \xi_n) \tag{7}$$

d.h. durch eine Normalverteilung mit Mittelwert $\xi_n + \mu(\xi_n)$ und Varianz $Var(\xi n)$.

Hieraus wird schließlich eine Approximation $\tilde{R}_\pi(\theta)$ ermittelt. Hierzu werden die zu jedem Zeitschritt t ermittelten Gewichtsvektoren $\alpha_t = (\alpha_{t,1}, \dots \alpha_{t,n})$ und die oben beschriebenen Erwartungswerte E herangezogen:

$$\tilde{R}_\pi(\theta) = \sum_{t=0}^T \sum_{n=1}^N \alpha_{t,n} E_{x \sim \phi_n}[r(x)] \tag{8}$$

Diese Approximation $\tilde{R}_\pi(\theta)$ ist eine Näherung mittels numerischer Quadratur einer Kostenfunktion R, die gegeben ist durch

$$R_\pi(\theta)) = \sum_{t=0}^T E_{x_t}[r(x_t)]. \tag{9}$$

Eine Ermittlung der Erwartungswerte E erfordert eine Integration über die Wahrscheinlichkeitsverteilung $p(x_t)$) für jeden der Zeitpunkte t. Dies ist analytisch nicht in geschlossener Form lösbar, da die zeitliche Evolution der Wahrscheinlichkeitsverteilung p von einem Zeitschritt t zum nächsten t+1 gegeben ist durch

$$p(x_{t+1}) = \int p(x_{t+1}|x_t)p(x_t)dx_t \tag{10}$$

Die Lösung dieser Gleichung muss daher durch numerische Näherungsverfahren geschehen. Viele Verfahren zum Ermitteln dieser zeitlichen Evolution der Wahrscheinlichkeitsverteilung p stehen vor der Herausforderung, eine hinreichende Genauigkeit zu erzielen, ohne sehr rechenintensiv zu werden. Das Verfahren mit numerischer Quadratur erreicht überraschenderweise diese Ziele.

Der neue Parameter θ* ist wird nun (1060) ermittelt als

$$\theta^* = \arg\max_\theta \tilde{R}_\pi(\theta). \tag{11}$$

Dies kann beispielsweise mit einem Gradientenabstiegsverfahren geschehen, in dem die Gradienten numerisch ermittelt oder analytische vorgegeben werden. Auch explorative Verfahren sind möglich. Der Parameter θ wird durch den neuen Parameter θ* ersetzt.

Dann (1070) wird optional überprüft, ob das Verfahren der Ermittlung des Parameters θ konvergiert ist. Ist dies nicht der Fall ("n"), wird zurück zu Schritt 1010 verzweigt. Ist dies hingegen der Fall ("j") sind optimale Parameter θ gefunden, und das Verfahren wird beendet (1080). Selbstverständlich kann das Verfahren auch nach einer einzigen Iteration beendet werden.

Figur 5 illustriert das Verfahren zum Ermitteln der Gewichtsvektoren $\alpha_t$.

Zunächst (1500) wird der erste Gewichtsvektor $\alpha_1$ aus der vorgegebenen initialen Wahrscheinlichkeitsverteilung $p(x_0)$ ermittelt, gemäß

$$\alpha_{1,i} = w_i \cdot p(x_0 = \xi_i) \tag{12}$$

Dann (1510) wird die Matrix

$$M = diag(w)\Phi \tag{13}$$

ermittelt, mit

$$diag(w)_{i,j} = w_i \delta_{i,j} \tag{14}$$

und

$$\Phi_{i,j} = \phi_j(\xi_i) \quad .\tag{15}$$

Schließlich (1520) werden die Gewichtsvektoren $a_2, \ldots \alpha_T$ iterativ erzeugt mit

$$\alpha_{t+1} = M\alpha_t.\tag{16}$$

Damit endet dieses Verfahren.

Figur 6 illustriert das Verfahren zum Ermitteln der Stützstellen $\xi_i$ und der zugehörigen Stützgewichte $w_i$.

Zunächst wird eine Aufteilung ein Zustandsraum X aller möglichen Werte der Regelungsgröße x initialisiert. Beispielsweise kann die Aufteilung initial als die triviale Aufteilung des Zustandsraums X gewählt werden, d.h. der Zustandsraum X wird gar nicht unterteilt, sondern ist durch den gesamten Zustandsraum X gegeben.

Ein Zähler s wird auf den Wert s=1 initialisiert. Die Stützstellen $\xi_i$ werden gemäß einer numerischen Quadraturregel (wie beispielsweise der Kepler'schen Fassregel, der Trapez-Regel, der Simpson-Regel oder der Gauß-Quadratur) für den Zustandsraum X ermittelt, ebenso die zugehörigen Stützgewichte $w_i$.

Dann (2010) wird überprüft, ob der Zähler s die maximale Partitionierungstiefe Lmax erreicht hat. Ist dies der Fall, wird das Verfahren in Schritt beendet (2100).

Andernfalls wird der Sollwert xd als Wert $\tau_0'$ für die Regelungsgröße x angenommen und mit Formel (1), (1') eine zeitliche Evolution $\tau_0', \tau_1' \ldots \tau_T'$ ermittelt (2020).

Optional wird dann ebenso ein weiterer Wert $\tau_0$ für die Regelungsgröße x gemäß der initialen Wahrscheinlichkeitsverteilung $p(x_0)$ zufällig ausgewählt, und mit Formel (1), (1') analog zu Schritt 2020 eine weitere zeitliche Evolution $\tau_0, \tau_1, \ldots \tau_T$ ermittelt (2030).

Dann wird ein weiterer Zähler I auf den Wert I=1 initialisiert (2040) und überprüft (2050), ob der weitere Zähler I den Wert des Zählers s erreicht hat. Ist dies der Fall, folgt Schritt 2060, in dem der Zähler s um eins inkrementiert wird, und zurück zu Schritt 2010 verzweigt wird. Ist dies nicht der Fall, wird die Größe $\rho_l(\tau)$ ermittelt (2070), die charakterisiert, ob die Dichte der Stützstellen $\xi_i$ angemessen ist. Beispielsweise kann sie ermittelt werden zu

$$\rho_l(\tau) = \frac{vol(X_l)}{N_l \min_{\tau_i \tau_i' \in X_l} Var(\tau_i)} \quad .\tag{16}$$

Hierbei ist $X_l$ das I-te Teilvolumenelement der Partitionierung des Zustandsraums X, $Vol(X_l)$ sein Volumen und $N_l$ die Zahl der Stützstellen $\xi_i$ darin. Es wird dann überprüft (2070), ob diese Größe $\rho_l(\tau) < 1$ ist, wobei auch andere Schwellwerte als der Wert "1" möglich sind.

Ist dies der Fall ("j"), wird ein Teilvolumenelement $X_l$ in mehrere kleinere Teilvolumenelemente aufgespalten (2080), beispielsweise, indem das Teilvolumenelement $X_l$ entlang einer oder entlang aller seiner Dimensionen halbiert wird. Dann werden die mit dem Teilvolumenelement $X_l$ assoziierten Stützstellen $\xi_i$ und zugehörigen Stützgewichte $w_i$ entfernt und für jedes der neu erzeugten kleineren Teilvolumenelemente Stützstellen $\xi_i$ und zugehörigen Stützgewichte $w_i$ hinzugefügt. Dann folgt Schritt 2090, in dem der weitere Zähler I um eins inkrementiert wird. Anschließend wird zurückverzweigt zu Schritt 2050.

Ergibt die Überprüfung in Schritt 2070, dass die Bedingung nicht erfüllt ist ("n"), folgt unmittelbar Schritt 2090.

**Patentansprüche**

1. Verfahren zum automatischen Einstellen mindestens eines Parameters ($\theta$) eines Aktorregelungssystems(45), welches zum Regeln einer Regelungsgröße (x) eines Aktors (20) auf eine vorgebbare Sollgröße (xd) eingerichtet ist, wobei das Aktorregelungssystem (45) eingerichtet ist, abhängig von dem mindestens einen Parameter ($\theta$), der Sollgröße (xd) und der Regelungsgrö-ße (x) eine Stellgröße (u) zu generieren und abhängig von dieser Stellgröße (u) den Aktor (20) anzusteuern,

wobei ein neuer Wert ($\theta^*$) des mindestens einen Parameters ($\theta$) abhängig von einer Langzeit-Kostenfunktion, R, gewählt wird, wobei diese Langzeit-Kostenfunktion, R, abhängig von einer prädizierten zeitlichen Evolution einer Wahrscheinlichkeitsverteilung, p, der Regelungsgröße (x) des Aktors (20) ermittelt wird und der Parameter ($\theta$) dann auf diesen neuen Wert ($\theta^*$) gesetzt wird,

**dadurch gekennzeichnet, dass** die prädizierte zeitliche Evolution der Wahrscheinlichkeitsverteilung, p, der Regelungsgröße (x) durch eine Approximation einer Integration über mögliche Werte der Regelungsgröße (x) ermittelt wird, wobei diese Approximation durch numerische Quadratur geschieht, wobei die Numerische Quadratur das Integral durch Auswertung des Integranden an Stützstellen ($\xi$) und zu den Stützstellen ($\xi$) zugehörigen Stützgewichten annähert;

wobei eine Dichte von den Stützstellen ($\xi$) abhängig von einer ersten ermittelten, insbesondere mittels eines Modells (g) und/oder des Aktorregelungssystems (45) ermittelten, zeitlichen Evolution, $\tau 1 \ldots \tau T$, der Regelungsgröße (x) ausgehend von einem aus einer initialen Wahrscheinlichkeitsverteilung, p(x0), zufällig ermittelten initialen Wert, $\tau 0$, der Regelungsgröße (x) ermittelt wird,

wobei die Dichte der Stützstellen ($\xi$) auch abhängig von einer zweiten ermittelten, insbesondere mittels des Modells, g, und/oder des Aktorregelungssystems (45) ermittelten, zeitlichen Evolution, $\tau' 0 \ldots \tau' T$, der Regelungsgröße (x) ausgehend vom Sollwert (xd) als initialem Wert, $\tau' 0$, der Regelungsgröße (x) ermittelt wird,

wobei eine Dichte der Stützstellen ($\xi$) abhängig von einer Größe, Var, ge-wählt wird, die eine Glattheit des Modells, g, an wenigstens einem Wert, $\tau 0 \ldots \tau T$, $\tau' 0 \ldots \tau' T$, der Regelungsgröße (x) in den ermittelten zeitlichen Evolutionen der Regelungsgröße (x) charakterisiert.

2. Verfahren nach Anspruch 1, wobei die prädizierte zeitliche Evolution abhängig von einem Modell, g, insbesondere einem Gauß-Prozess, vorteilhafterweise einem dünnbesetzten Gauß-Prozess, des Aktors (20) ermittelt wird.

3. Verfahren nach Anspruch 2, wobei das Modell (g) abhängig von der Stellgröße (u), die bei einer Regelung des Aktors (20) mit dem Aktorregelungssystem (45) dem Aktor (20) zugeführt wird, und der dann resultierenden Regelungsgröße (x) angepasst wird, wobei nach erfolgter Anpassung des Modells, g, erneut ein neuer Wert ($\theta^*$) des mindestens einen Parameters ($\theta$) abhängig von der prädizierten Evolution der Wahrscheinlichkeitsverteilung, p, der Regelungsgröße (x) des Aktors (20) ermittelt wird, wobei die erneute Ermittlung des neuen Werts ($\theta^*$) des mindestens einen Parameters ($\theta$) abhängig von dem nun angepassten Modell, g, ermittelt wird.

4. Verfahren nach Anspruch 1, wobei die Dichte von den Stützstellen ($\xi$) in einem Bereich, $X_i$, abhängig von einem kleinsten Wert gewählt wird, wobei der kleinste Wert der kleinste Wert aus den die Glattheit des Modells charakterisierenden Größen, Var, an denjenigen Werten, $\tau 0 \ldots \tau T$, $\tau' 0 \ldots \tau' T$, der Regelungsgröße (x) ist, die in diesem Bereich, $X_i$, liegen.

5. Verfahren nach einem der Ansprüche 1 bis 4, wobei die Dichte der Stützstellen ($\xi$) einem Bereich auch abhängig von einer mittleren Dichte der Stützstellen ($\xi$) in diesem Bereich gewählt wird

6. Verfahren nach Anspruch 4 und 5, wobei die Dichte von den Stützstellen ($\xi$) erhöht wird, wenn ein Quotient aus mittlerer Dichte von den Stützstellen ($\xi$) und dem kleinsten Wert einen vorgebbaren Schwellwert unterschreitet

7. Verfahren nach einem der Ansprüche 1 bis 6 wobei die Ermittlung eines Ergebnisses der numerischen Quadratur abhängig von einer Ermittlung einer zeitlichen Evolution von Gewichten ($\alpha_i$) erfolgt, wobei die Gewichte ($\alpha_i$) jeweils durch des Produkts aus Sützgewichten ($w_i$) und den jeweiligen Werten der Wahrscheinlichkeitsdichte, p, an der zugehörigen Stützstelle ($\xi_i$) gegeben ist.

8. Verfahren nach einem der vorherigen Ansprüche, wobei die Langzeit-Kostenfunktion, R, abhängig von einer lokalen Kostenfunktion, r, gewählt wird, wobei die lokale Kostenfunktion, r, abhängig von einer Gaußfunktion und/oder einer Polynomfunktion gewählt wird, welche abhängig von einer Differenz zwischen Stellgröße (x) und vorgebbarem Sollwert (xd) ist.

9. Verfahren nach einem der vorhergehenden Ansprüche, wobei die Stellgröße (u) mittels einer Beschränkungsfunktion ($\sigma$) auf Werte innerhalb eines vorgebbaren Stellgrößenbereichs beschränkt wird.

10. Computerprogramm mit einem Programmcode zur Durchführung eines Verfahrens nach einem der Ansprüche 1 bis 9, wenn der Programmcode auf einem Computer ausgeführt wird.

11. Maschinenlesbares Speichermedium (42), auf dem das Computerprogramm nach Anspruch 10 gespeichert ist.

12. Aktorregelungssystem (45), welches zum Regeln einer Regelungsgröße (x) eines Aktors (20) auf eine vorgebbare Sollgröße (xd) eingerichtet ist, wobei das Aktorregelungssystem (45) eingerichtet ist, abhängig von dem mindestens einen Parameter (θ), der Sollgröße (xd) und der Regelungsgröße (x) eine Stellgröße (u) zu generieren und abhängig von dieser Stellgröße (u) den Aktor (20) anzusteuern, **dadurch gekennzeichnet, dass** der mindestens eine Parameter θ) mit dem Verfahren nach einem der Ansprüche 1 bis 9 eingestellt wurde.

**Claims**

1. Method for automatically setting at least one parameter (θ) of an actuator control system (45), which is set up for controlling a control variable (x) of an actuator (20) to a predefinable target value (xd), wherein the actuator control system (45) is set up, depending on the at least one parameter (θ), the target value (xd) and the control variable (x) to generate a manipulated variable (u) and depending on this manipulated variable (u) to control the actuator (20), wherein a new value (θ*) of the at least one parameter (θ) is selected depending on a long-term cost function, R, wherein this long-term cost function, R, is determined depending on a predicted temporal evolution of a probability distribution, p, of the control variable (x) of the actuator (20) and the parameter (θ) is then set to this new value (θ*), **characterized in that**

the predicted temporal evolution of the probability distribution, p, of the control variable (x) is determined by an approximation of an integration over possible values of the control variable (x), this approximation being done through numerical quadrature, wherein the numeric quadrature approximates the integral by evaluating the integrand at supporting points (ξ) and support weights associated with the supporting points (ξ);
wherein a density of supporting points (ξ) being determined as a function of a determined first temporal evolution, $\tau1 ... \tau T$, of the control variable (x), in particular determined by means of the model, g, and/or the actuator control system (45), starting from an initial value, $\tau0$, of the control variable (x) determined at random from an initial probability distribution, p(x0), wherein the density of the supporting points (ξ) is also determined as a determined second temporal evolution, $\tau'0 ... \tau'T$, of the control variable (x), in particular determined by means of the model, g, and/or the actuator control system (45), starting from the setpoint value (xd) as initial value, $\tau'0$, of the control variable (x), wherein a density of the supporting points (ξ) is selected as a function of a quantity (Var) which characterizes a smoothness of the model, g, at at least one value, $\tau0 ... \tau'T, \tau'0 ... \tau'T$, of the control variable (x) in the determined temporal evolution or evolutions of the control variable (x).

2. The method of claim 1, wherein the predicted temporal evolution is determined as a function of a model, g, in particular a Gaussian process, advantageously a sparse Gaussian process, of the actuator (20).

3. The method of claim 2, wherein the model (g) is adapted depending on the manipulated variable (u), which is supplied to the actuator (20) with the actuator control system (45) in a control of the actuator (20), and then adapted to the resulting control variable (x), wherein after the adaptation of the model, g, a new value (θ*) of the at least one parameter (θ) is again determined, depending on the predicted evolution of the probability distribution, p, of the control variable (x) of the actuator (20), wherein the re-determination of the new value (θ*) of the at least one parameter (θ) is determined depending on the now adapted model, g.

4. The method of claim 1, wherein the density of the supporting points (ξ) in a range, Xi, is selected depending on a smallest value, wherein the smallest value is the smallest value from the quantities, Var, characterizing a smoothness of the model at those values, $\tau0 ... \tau T, \tau'0 ... \tau'T$, of the control quantity (x) which lie in this range, Xi.

5. The method of claims 1 or 4, wherein the density of the supporting points (ξ) of a range is also selected depending on a mean density of the supporting points (ξ) in this range.

6. The method of claim 4 and 5, wherein the density of supporting points (ξ) is increased if a quotient of average density of supporting points (ξ) and the smallest value falls below a predefinable threshold value.

7. Method according to one of claims 1 to 6, wherein the determination of a result of the numerical quadrature is dependent on a determination of a temporal evolution of weights ($\alpha_i$), wherein the weights ($\alpha_i$) are respectively given by the product of support weights ($w_i$) and the respective values of the probability density, p, at the associated supporting point ($\xi_i$).

8. Method according to one of the preceding claims, wherein the long-term cost function, R, is selected as a function of a local cost function, r, the local cost function, r, being selected as a function of a Gaussian function and/or a polynomial function which depends on a difference between the manipulated variable (x) and the predefinable target value (xd).

9. Method according to one of the preceding claims, wherein the manipulated variable (u) is limited to values within a predefinable manipulated variable range by means of a limitation function ($\sigma$).

10. computer program with a program code for carrying out a method according to one of claims 1 to 9, if the computer program is executed on a computer.

11. A machine-readable storage medium (42) storing the computer program of claim 10.

12. Actuator control system (45) which is set up to control a control variable (x) of an actuator (20) to a predefinable target value (xd), wherein the actuator control system (45) is set up, depending on the at least one parameter ($\theta$) target value (xd) and the control variable (x) to generate a manipulated variable (u) and depending on this manipulated variable (u) to control the actuator (20), **characterized in that** the at least one parameter ($\theta$) has been set with the method according to any of claims 1 to 9.

**Revendications**

1. Procédé de réglage automatique d'au moins un paramètre ($\theta$) d'un système de régulation d'actionneur (45), qui est conçu pour réguler une grandeur de régulation (x) d'un actionneur (20) sur une grandeur de consigne (xd) pouvant être prédéfinie, le système de régulation d'actionneur (45) étant conçu pour générer une grandeur de réglage (u) en fonction du au moins un paramètre ($\theta$), de la grandeur de consigne (xd) et de la grandeur de régulation (x) et pour commander l'actionneur (20) en fonction de cette grandeur de réglage (u),

une nouvelle valeur ($\theta^*$) de l'au moins un paramètre ($\theta$) étant choisie en fonction d'une fonction de coût à long terme (R), cette fonction de coût à long terme, R, étant déterminée en fonction d'une évolution temporelle prédite d'une distribution de probabilité, p, de la grandeur de régulation (x) de l'actionneur (20) et le paramètre ($\theta$) étant alors fixé à cette nouvelle valeur ($\theta^*$),
characterisé en ce que
l'évolution temporelle attendue de la distribution de probabilité, p, de la grandeur de régulation (x) étant déterminée par une approximation d'une intégration sur des valeurs possibles de la grandeur de régulation (x), cette approximation étant effectuée par quadrature numérique, dans lequel la quadrature numérique approxime l'intégrale en évaluant l'intégrande aux points d'appui ($\xi$) et aux poids d'appui associés aux points d'appui ($\xi$) ;
une densité des points d'appui ($\xi$) étant déterminée en fonction d'une première évolution temporelle, $\tau1 ... \tau'T$, de la grandeur de régulation (x), déterminée en particulier au moyen du modèle (g) et/ou du système de régulation d'actionneur (45), à partir d'une valeur initiale ($\tau0$) de la grandeur de régulation (x) déterminée de manière aléatoire à partir d'une distribution de probabilité initiale, p(x0), la densité des points d'appui ($\xi$) étant également déterminée en fonction d'une seconde évolution temporelle, $\tau'1$) ... $\tau'T$, de la grandeur de régulation (x) est déterminée, en particulier au moyen du modèle (g) et/ou du système de régulation d'actionneur (45), à partir de la valeur de consigne (xd) en tant que valeur initiale ($\tau'0$) de la grandeur de régulation (x),
une densité des points d'appui ($\xi$) étant choisie en fonction d'une grandeur (Var) qui caractérise un lissage du modèle, g, à au moins une valeur, $\tau0 ... \tau T$, $\tau'0 ... \tau'T$, de la grandeur de régulation (x) dans la ou les évolutions temporelles déterminées de la grandeur de régulation (x).

2. Procédé selon la revendication 1, dans lequel l'évolution temporelle prédite est déterminée en fonction d'un modèle, g, en particulier un processus gaussien, avantageusement un processus gaussien à faible densité, de l'actionneur (20).

3. Procédé selon la revendication 2, dans lequel le modèle (g) est adapté en fonction de la grandeur de réglage (u) qui est amenée à l'actionneur (20) lors d'une régulation de l'actionneur (20) avec le système de régulation d'actionneur (45), et en fonction de la grandeur de régulation (x) qui en résulte, dans lequel l'adaptation du modèle, g, étant effectuée, est déterminé à nouveau une nouvelle valeur ($\theta^*$) de l'au moins un paramètre ($\theta$) en fonction de l'évolution prédite de la distribution de probabilité, p, de la grandeur de régulation (x) de l'actionneur (20), la nouvelle détermination de la nouvelle valeur ($\theta^*$) de l'au moins un paramètre ($\theta$) étant déterminée en fonction du modèle, g, désormais adapté.

4. Procédé selon la revendication 1, dans lequel la densité de points d'appui ($\xi$) dans une zone, Xi, est choisie en fonction d'une valeur minimale, la valeur minimale étant la valeur la plus petite parmi les grandeurs, Var, caractérisant un lissage du modèle aux valeurs, $\tau 0 \ldots \tau T$, $\tau' 0 \ldots \tau' T$, de la grandeur de régulation (x) qui se trouvent dans cette zone, Xi.

5. Procédé selon l'une des revendications 1 à 4, dans lequel la densité des points d'appui ($\xi$) d'une zone, Xi, est également choisie en fonction d'une densité moyenne des points d'appui ($\xi$) dans cette zone, Xi.

6. Procédé selon les revendications 4 et 5, dans lequel la densité de points d'appui ($\xi$) est augmentée lorsqu'un quotient de la densité moyenne de points d'appui ($\xi$) et de la plus petite valeur est inférieur à une valeur de seuil prédéfinissable.

7. Procédé selon l'une des revendications 1 à 6, dans lequel la détermination d'un résultat de la quadrature numérique s'effectue en fonction d'une détermination d'une évolution temporelle de poids ($\alpha_i$), les poids ($\alpha_i$) étant donnés à chaque fois par le produit des poids d'appui (wi) et des valeurs respectives de la densité de probabilité, p, au point d'appui associé ($\xi_i$)..

8. Procédé selon l'une des revendications précédentes, dans lequel la fonction de coût à long terme, R, est choisie en fonction d'une fonction de coût locale, r, la fonction de coût locale, r, étant choisie en fonction d'une fonction gaussienne et/ou d'une fonction polynomiale qui dépend d'une différence entre la grandeur de régulation (x) et la valeur de consigne (xd) pouvant être prescrite.

9. Procédé selon l'une des revendications précédentes, dans lequel la grandeur réglage (u) est limitée, au moyen d'une fonction de limitation ($\sigma$), à des valeurs situées dans une plage de grandeurs réglantes pouvant être prédéfinies.

10. Programme d'ordinateur contenant un code de programmation pour l'exécution d'une procédé selon l'une des revendications 1 à 9, lorsque le code de programmation est exécuté sur un ordinateur.

11. Support d'enregistrement (42) lisible par machine, sur lequel est enregistré le programme d'ordinateur selon la revendication 10.

12. Système de régulation d'actionneur (45), qui est conçu pour réguler une grandeur de régulation (x) d'un actionneur (20) sur une grandeur de consigne (xd) pouvant être prédéfinie, le système de régulation d'actionneur (45) étant conçu pour, en fonction d'au moins un paramètre ($\theta$), de la grandeur de consigne (xd) et de la grandeur de régulation (x) et à commander l'actionneur (20) en fonction de cette grandeur de réglage (u), **caractérisé en ce que** le au moins un paramètre ($\theta$) a été réglé par le procédé selon l'une des revendications 1 à 9.

Fig. 1

**Fig. 2**

Fig. 3

**Fig. 4**

| 1500 | → | 1510 | → | 1520 |

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013212889 A1

**In der Beschreibung aufgeführte Nicht-Patentliteratur**

- **B. BISCHOFF et al.** Policy search for learning robot control using sparse data. IEEE, 2014, 3882, , 3887
- Online learning and planning of dynamical systems using Gaussian processes. **ANKIT GOYAL.** Thesis. Indian Institute of Technology, 2015
- **DRUCKSCHRIFT J. VINOGRADSKA et al.** *Stability of controllers for Gaussian process forward models,* Januar 2016